# EUROPEAN PATENT SPECIFICATION

(11) **EP 2 167 861 B1**
(45) Date of publication and mention of the grant of the patent: **27.03.2013**
(21) Application number: 08787697.5
(22) Date of filing: 09.07.2008
(51) Int. Cl.: F16L 47/03, F16L 25/01, B29C 65/06, B32B 27/00, B32B 1/08, H01R 13/00, B29C 65/34, B29L 23/00, B29L 9/00, F16L 9/133

(54) **METHOD OF GROUNDING MULTILAYER PIPES**
VERFAHREN ZUR ERDUNG MEHRSCHICHTIGER ROHRE
PROCEDE DE MISE A LA TERRE DE TUYAUX A COUCHES MULTIPLES

(30) Priority: 10.07.2007 FI 20075531
(43) Date of publication of application: 31.03.2010
(73) Proprietor: Oy KWH Pipe AB, 65101 Vaasa (FI)
(72) Inventor: JANSSON, Patrick, FI-65101 Vaasa (FI); HOLM, Alf, FI-65101 Vaasa (FI); BONDÉN, Adrian, FI-65101 Vaasa (FI)
(74) Representative: Sundman, Patrik Christoffer
(86) International application number: PCT/FI2008/050420
(87) International publication number: WO 2009/007511

(56) References cited:
- EP-A- 1 872 048
- JP-A- 5 340 495
- JP-A- 11 270 771
- US-A1- 2001 048 223

## Description

### Background of the Invention

### Field of the Invention

The present invention relates to multilayer pipes. In particular, the present invention concerns pipelines or pipings formed by a plurality of multilayer pipes comprising at least one layer of a conductive material. The present invention also concerns methods of jointing two multilayer pipes comprising conductive layers to achieve a pipe joint which allows for grounding of the conductive layer as well as for uninterrupted properties of conductivity over the joint.

### Description of Related Art

Flammable liquids and gases, such as gasoline and other hydrocarbons, dry substances, such as dust particles, as well as many other materials are capable of inducing a static charge. If the charge is not conducted out of a system containing these materials, there is a risk of spark ignition. For this reason, only electrically conductive, or at least dissipative, materials can be used in direct contact with media of the above mentioned types.

Suitable conduits for materials of the above kind are represented by multilayer polymer pipes, where the main layer is made of a non-conductive material and conductive layers have been added on the inside or outside (or both) of the pipe. This construction offers a cost effective alternative to pipes made fully of conductive material. However, it also poses some demands on jointing and grounding of the pipes.

Thus, when the conductive layer of the multilayer pipe is located on the inside of the pipe, it is shielded from the surrounding by the insulating main polymer layer. It is necessary to find a specific way to ground the inner layer. It is also of interest to find jointing methods that function as a conductive bridge between two conductive multilayer pipes that are joined. If there is no discontinuity in the conduction at the joint, it is not necessary to ground every single pipe length, since the whole pipeline is then conductive from end to end.

A number of patents deal with jointing of conductive polymer pipes. EP 0 975 911 describes a method of leading away static electricity in mutually joined conductive polymer pipes. According to the method, a sleeve-like body of conductive material is placed in the ends of two pipe-parts to be joined end-to-end, so as to internally bridge the intermediate joint; and a contact pressure is generated between the sleeve-like body and the inner surfaces of the barrier layers at the ends of the two pipe-parts so as to provide an inner, electrically conductive connection between the conductive barrier layers of the mutually joined pipe-parts.

US 5 951 812 provides a method of joining two pieces of fiberglass reinforced pipe using a cylindrical joining member adapted to receive the two ends of the pipes. The joining method comprises placing the ends of the pipes inside the joining member and arranging a conductive adhesive between the joining member and the pipes so that the adhesive conducts electricity from one pipe piece to the other pipe piece. The conductive adhesive extends along the inside and the outside pipe conductive surfaces and contacts the inside and the outside conductive surfaces so that static charge on the inside pipe surface can pass to the outside pipe surface.

US 3 943 273 discloses a conducting plastic pipe system wherein one part of the pipes is shaped as a male pipe part and the other as a female plastic pipe part with conducting covering layers which are interconnected by means of a conducting sealing ring between the male and female part. In case there are outer covering layers, the covering layer is extended onto the inner side of the muff end of the female pipe part.

JP 07310710 relates to a connecting member for antistatic synthetic resin members. To provide a connecting member capable of connecting an antistatic synthetic resin member with the antistatic function thereof maintained. According to the reference, a connecting section for catching the end of an antistatic synthetic resin member is formed at both side ends of a connecting member body. Also, antistatic jointing layers are formed on the surface of the body for jointing antistatic layers formed on the surface of the member inserted and fixed in the section at both side ends.

As will appear from the above survey, the known solutions are complex and require the use of separate sealing rings and joining members potentially coupled with the use of resins and adhesives.

### Summary of the Invention

It is an aim of the present invention to eliminate at least a part of the problems associated with the known solutions and to provide a new way of jointing conductive multilayer pipes made of polymer materials in particular to provide efficient grounding of conductive layers even if these are covered by a non-conductive layer.

It is another aim to provide new pipelines comprising a plurality of multilayer pipes jointed together to form a continuous conduit with proper grounding of the conductive layers.

These and other objects, together with the advantages thereof over known methods and pipe joints, are achieved by the present invention as hereinafter described and claimed.

The present invention is based on the idea that at a pipe joint contact from the inside to the outside of the pipe is achieved by forming in the pipe wall at least one aperture or hole which extends from the surface of the pipe to the conductive layer. The aperture(s) or hole(s) is/are filled with a conductive, preferably melt-processible material, which is compatible with the material of the conductive layer. The conductive material that fills the aperture serves as a bridge from the conductive inner layer of the pipe to the outside. The aperture preferably extends from the surface to the conductive layer essentially transversally to the central axis of the pipe at the joint.

If the outside layer of the pipe is non-conductive, the inside layer can be grounded through grounding of the conductive bridge. If the outside layer of the pipe is conductive, the inside layer can be grounded through any point on the outside layer of the pipe, as the conductive inner and outside layer are connected through the conductive bridge.

Based on this method, in a pipeline or piping according to the invention, at least one joint between the plurality of individual pipes, making up the pipeline or piping, comprises a conducting bridge extending from the conductive layer through any overlapping non-conductive layers, which bridge allows for grounding of the conductive layer.

More specifically, the method according to the present invention of grounding multilayer pipes is mainly characterized by what is stated in the characterizing part of claim 1

The method of jointing two multilayer pipes is characterized by what is stated in the characterizing part of claim 11.

The piping according to the present invention is characterized by what is stated in the characterizing part of claim 12.

Considerable advantages are obtained by the present invention. Thus, no production of extra parts needed - the joint can be processed at the installation site using materials readily available. The inner surface is smooth at the joint and the bridging between the inner layers of two abutting pipes is secure. A particularly preferred feature resides in the fact that the grounding system does not change the dimensions of the pipe. Furthermore, by mounting a sleeve around the joint, the pressure rating of the pipe can be maintained.

By providing all joints between adjacent pipes with a conductive bridge of the present kind, the conductive inner layers are connected to form an integral conductive line which can be grounded at one single point.

Further details and advantages of the invention will become evident from the following detailed description of the invention. Reference is made to the appended drawings, in which
Figure 1 shows the longitudinal cross-section of a first embodiment of a pipe joint according to the present invention;
Figure 2 depicts the longitudinal cross-section of a second embodiment of a pipe joint according to the invention, wherein an electro-fusion plug is employed for achieving electrical conductivity over the joint; and
Figure 3 shows the longitudinal cross-section of a third embodiment of a pipe joint, comprising friction welding plugs.

As evident from above, the present invention relates to jointing of multilayered polymer pipes, in particular conductive multilayer pipes. The present invention provides for good grounding of the conductive layer and optionally of forming of conductive bridges between two adjacent pipes.

Pipes of particular interest for the invention typically have at least two layers, an outer layer and an inner layer. The wall structure may comprise further layers, e.g. at least one middle layer located between the inner and the outer layers. Preferably, at least a part of the layers is produced from materials which can be co-extruded. Typically, polyolefins, such as polyethylene or polypropylene, are used for making the structural layers of the pipe wall.

At least one of the layers is electrically conductive or dissipative. And at least one of these layers is located under an outer non-conductive layer. Typically, there is one or two conductive or dissipative layer(s) which is/are covered by an outer or outermost layer. According to one embodiment, the outermost layer/surface layer of the pipe is non-conductive. In this embodiment, the conductive bridge formed according to the invention extends to the surface through the non-conductive layer and provides a conductive tab which can be grounded. According to another embodiment, the pipe comprises two conductive layers, viz. a first conductive layer, a second conductive layer located at a distance from the first conductive layer, and an intermediate layer located between the first and the second conductive layer. Typically, the intermediate layer is a structural, non-conductive layer. The second conductive layer forms the surface of the pipe, and the two conductive layers are connected through the conductive bridge. Naturally, it is possible to have pipes with more than two conductive layers. There can be several structural and/or non-conductive layers, also.

The conductive or dissipative layer consists of a polymer material, preferably based on a thermoplastic material, which has been made permanently conductive. The properties of electrical conductivity can be obtained by blending the polymer material with conductive particles, such as fillers comprising carbon black or metal particles, conductive fibres or nanocomposites, including conductive carbon nanotubes. The layer may also contain, optionally and preferably in combination with the above conductive particles or fibres, inherently conductive polymers (ICPs), such as polyacetylene, polythiophene, polyaniline or polypyrrole, or ionomers contaning alkaline and/or earth alkaline metal ions or mixtures thereof. Preferably, the material has a surface resistivity in the conductive range, in particular the surface resistivity is from 1 to 10⁶ohm/sq (ASTM D-257). The layer may also be dissipative, which stands for surface resistivity of about 10⁷ to 10¹² ohm/sq (ASTM D-257).

Although the term "conductive" alone is being used in the present description on some occasions to designate the properties of the inner layer, it should be understood that also "dissipative" properties are being referred to.

The weight ratio between the structural and the conductive material in the pipe varies depending on the mechanical strength requirements. The structural layer(s) determine(s) the nominal pressure of the pipe.

The thickness of the conductive layer(s) varies depending on the application, but typically it is in the range of about 0.01 to 50 mm, in particular about 0.1 to 10 mm, preferably about 0.2 to 5 mm. The total wall thickness of the pipe is about 2 to 150 mm, typically about 3 to 30 mm. The cross-sectional diameter can vary widely between about 32 and 2000 mm, typically from about 63 to 400 mm.

In a pipe of the above kind, a conductive bridge is formed from an inner conductive layer to the outside/surface of the pipe to allow for grounding of the layer. The conductive bridge also guarantees undisturbed conductivity between the pipes that are jointed. Basically, at least one, generally 1 to about 10, and preferably 1 to 4, in particular one or two apertures are formed in the pipe wall at the joint, which apertures extend through the wall from the non-conductive layer to the conductive layer. The apertures can be formed on the same side of the pipe, but preferably on opposite sides. When apertures are placed evenly around the circumference of the pipe, the grounding spots are equally evenly distributed and thus the distance from static charge induction points to the grounding spots is the shortest possible. Thus, generally a symmetrical distribution of the apertures along the periphery of the pipe is preferred.

Typically, the aperture has a circular cross-section, and the diameter thereof is about 5 to 50 mm, in particular about 10 to 30 mm. The depth of the aperture depends on the distance between the conductive layer and the surface of the pipe, Typically, with the above wall thicknesses, the conductive layer is located at about 3 to 30 mm from the surface. When the conductive layer which is to be grounded is located on the inside of the pipe, the aperture will preferably extend through the whole wall of the pipe. The aperture preferably extends essentially transversally to the central axis of the pipe at the joint. In practice, since the aperture is formed manually, i.e. by on-site drilling or milling, some inclination is also possible.

After the forming of the aperture, a conductive bridge is formed by filling the aperture with conductive material, said conductive material forming a conductive bridge from the conductive inside layer through the non-conductive layer to the outside thereof for grounding of the conductive layer(s). The conductive material can be introduced by extrusion or by fitting a solid piece of material into the aperture. Other ways of producing a suitable bridge or conductive plug is to use an electrofusion material which can be heated and melted in the aperture. A further way of achieving a suitable conductive plug is by friction welding, by which method the plug is rotated or vibrated at relatively high speed while applying a force. The friction heat generated at the interface between the plug and the pipe wall softens both components, and they thereby weld to each other.

In the jointing method, before the forming of the bridge, the ends of two multilayer pipes are fit against each other in abutting relationship. Once the proper steps have been taken to form a conductive bridge, the ends of the pipes are then secured to each other to form a joint between the pipes. One particular convenient way of securing the pipes is to use an electrofusion fitting, which is placed as a sleeve around the joint.

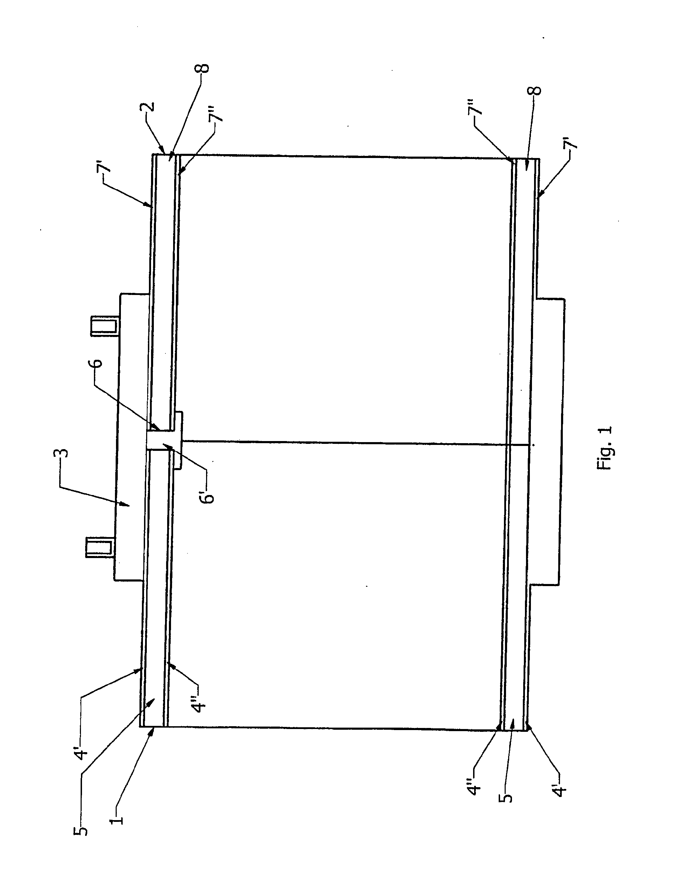

The invention provides various embodiments for achieving grounding of the conductive layer. These are shown in more detail in Figures 1 to 3:
Figure 1 relates to a first embodiment of the invention, wherein a plug 6' comprising conductive material is inserted into a hole drilled into a pipe wall. The two pipes which are jointed are given the reference numerals 1 and 2. They have two antistatic layers 4', 4" and 7', 7", which are placed on opposite sides of structural, non-conductive layers 5, 8. An electrofusion fitting, which is placed as a sleeve around the joint, is given the reference numeral 3.

The method according to this embodiment is carried out as follows:
First, at least one hole 6 is drilled through the pipe wall 1. Then, to keep the inside surface of the pipe smooth, a rubber inflatable stopper (balloon, not shown) is inserted into the pipe at the area where the hole has been drilled. The balloon is pressurized.

A conductive polymer 6' is extruded into the hole 6. The balloon hinders the extruded mass to flow freely into the pipe 1. By controlling the ratio between the pressure in the balloon and the temperature and pressure of the molten polymer, a sufficient flow length and profile can be achieved when filling the hole with the extruder. The balloon is allowing a certain amount of the molten conductive polymer to flow to the inside surface of the pipe, covering the area around the circumference of the hole. This increased contact area between the conductive inside layer and the conductive extruded material is preferred to ensure safer grounding.

The balloon is then de-pressurized and pulled out when the extrusion is finished and the material has been allowed to cool down to a level well below the melting point of the material.

In an alternative variant of the first embodiment, a solid plug is used instead of the extrusion method described above. In this alternative, a hole is drilled through the pipe wall, and a plug of conductive material is mechanically inserted.

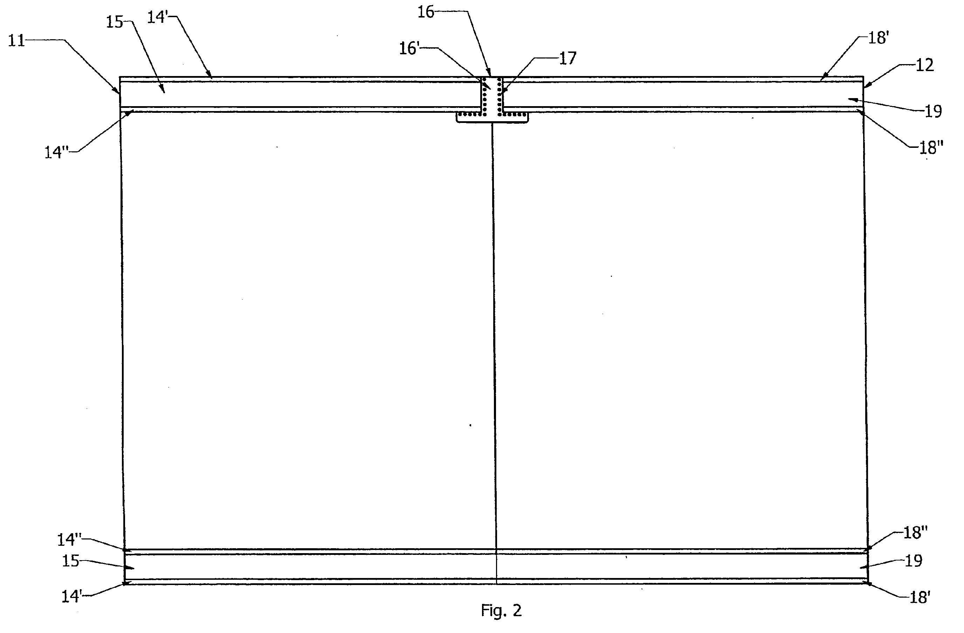

Figure 2 shows a second embodiment comprising the use of an electro-fusion plug made of a material with similar melt flow properties and conductivity as the conductive layer(s) in the pipe.

The ends of pipes 11 and 12 are brought together. The conductive layers are designated reference numerals 14', 14" and 18', 18"; the structural layers numerals 15 and 19, respectively. A hole 16 is drilled at the interface.

The pipes are then separated, so that an electro-fusion plug 16' can be inserted, and then the pipes are brought together again. The electrofusion plug 16' has integrated current leading wires 17. By introducing a current through the plug, the plug melts and welds to the pipe ends. Jointing is continued preferably with an electrofusion fitting (not shown).

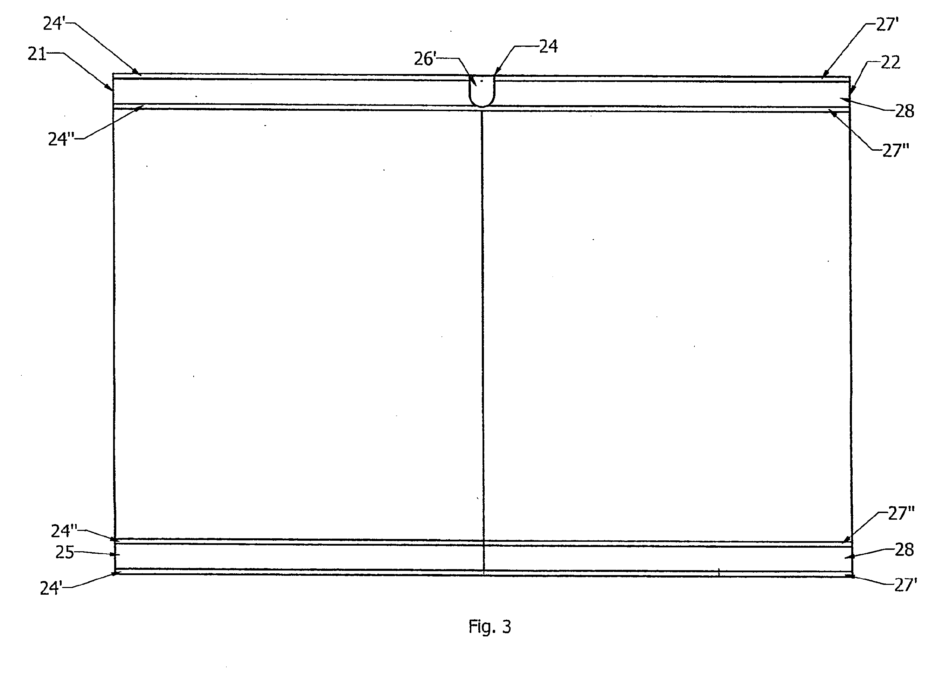

Figure 3 shows a third embodiment comprising the use of a friction welding plug 26'. In Figure 3, reference numerals 24', 24" and 27', 27" are used for the conductive layers, and numerals 25 and 28 for the structural layers.

The methods steps are largely the same as above explained for the first and second embodiments. Thus, the pipe ends 21 and 22 are brought together. A hole is milled from the outside of the pipe to the inner layers 24", 27". The shape of the milling bit can be flat or round. A plug 26' made of conductive material and the same shape as the milling bit is friction welded to the milled opening. Jointing is continued preferably with an electrofusion fitting (not shown).

In the above embodiments, a hole or aperture is drilled or milled into the pipe, from the outside as far as to the conductive layer. However, it should be noted that with pipes having a larger diameter, the hole can also be drilled /milled and filled from the inside of the pipe.

To avoid perforating the pipe wall, the drilling or milling means can be provided with an indicator light, e.g. a led light, with a voltage source could be connected. Using the inner layer as grounding, the indicator light can be switched on when the bore or bit is touching the surface and an electric circuit is formed. This embodiment provides for exact indication of the drilling/milling depth.

## Claims

1. Method of grounding a joint between two pipes (1,2) having a multilayered wall structure and containing at least one conductive layer (4",7") which is covered by a non-conductive layer (5,8) which is located on the outside of the conductive layer,
by
- forming at least one aperture in the (6,16) pipe wall at the joint, said aperture extending through the wall from the non-conductive layer to the conductive layer, and
- filling the aperture with conductive material, (6') said conductive material forming a conductive bridge from the conductive layer through the non-conductive layer to the outside thereof for grounding of the conductive layer.

2. The method according to claim 1, wherein the pipe comprises an inner conductive layer and an outer non-conductive layer, the latter forming the surface layer of the pipe, whereby the inner layer is grounded by grounding of the conductive bridge.

3. The method according to claim 1, wherein the pipe comprises a first conductive layer, a second conductive layer located at a distance from the first conductive layer, and an intermediate layer located between the first and the second conductive layer, whereby the second conductive layer forms the surface of the pipe and the conductive first and second layers being connected through the conductive bridge, said first conductive layer being grounded through any point on the second conductive layer.

4. The method according to any of claims 1 to 3, wherein the conductive bridge is formed by an extruded or solid piece of conductive polymer material.

5. The method according to any of claims 1 to 4, comprising
- inserting an inflatable stopper into the pipe at the area where a hole (6) has been drilled,
- extruding molten mass of a conductive polymer (6') into the hole (6), and
- restricting the flow of the molten polymer mass into the pipe (1) with the stopper while still allowing some of the molten polymer mass to flow over the edge inside the pipe to cover the area around the circumference of the hole in order to increase contact area between the conductive inside layer.

6. The method according to any of claims 1 to 3, comprising
- fitting one end of a first pipe (11) against one end of a second pipe (12) to form and interface between the pipes,
- drilling a hole 16 at the interface.between the pipes,
- temporarily separating the pipes,
- inserting an electro-fusion plug (16') and bringing the pipe ends against each other again, and
- melting the plug for welding it to the pipe ends.

7. The method according to any of claims 1 to 3, wherein a hole is milled from the outside of the pipe to the conductive layer (24", 27"), and a plug (26') made of conductive material and the same shape as the milled hole is friction welded to the milled opening.

8. The method according to any of claims 1 to 3, wherein a hole is milled from the inside of the pipe to the conductive layer (24", 27"), and a plug (26') made of conductive material and the same shape as the milled hole is friction welded to the milled opening.

9. The method according to any of the preceding claims, wherein the joint is secured with an electrofusion fitting (3), which is placed as a collar around the joint, or an equivalent mechanical means.

10. The method according to any of the preceding claims, wherein there are formed 1 to 10 conductive bridges, preferably about 1 to 4.

11. The method according to any of the preceding claims for jointing two pipes having a multilayered wall structure and containing at least one conductive layer which is covered by a non-conductive layer which is located on the outside of the conductive layer, in which method
- the ends of two multilayer pipes are fit against each other in abutting relationship and
- the ends of the pipes are secured to each other to form a joint between the pipes, and
- said conductive layer is grounded.

## Patentansprüche

1. Verfahren zum Erden einer Verbindung zwischen zwei Rohren (1, 2) mit einer mehrschichtigen Wandstruktur, und umfassend zumindest eine leitfähige Schicht (4", 7"), welche mit einer nicht leitfähigen Schicht (58) bedeckt ist, welche sich auf der Außenseite der leitfähigen Schicht befindet, durch
- Ausbilden zumindest einer Öffnung (6, 16) in der Rohrwand an der Verbindung, wobei sich die Öffnung durch die Wand von der nicht leitfähigen Schicht zu der leitfähigen Schicht erstreckt, und
- Ausfüllen der Öffnung mit einem leitfähigen Material (6'), wobei das leitfähige Material eine leitfähige Brücke von der leitfähigen Schicht durch die nicht leitfähige Schicht zu der Außenseite davon zum Erden der leitfähigen Schicht bildet.

2. Verfahren nach Anspruch 1, bei welchem das Rohr eine innere leitfähige Schicht und eine äußere nicht leitfähige Schicht umfasst, wobei letztere die Oberflächenschicht des Rohres bildet, wobei die innere Schicht durch Erden der leitfähigen Brücke geerdet ist.

3. Verfahren nach Anspruch 1, bei welchem das Rohr eine erste leitfähige Schicht, eine zweite leitfähige Schicht, welche sich in einem Abstand von der ersten leitfähigen Schicht befindet, und eine Zwischenschicht umfasst, die sich zwischen der ersten und der zweiten leitfähigen Schicht befindet, wobei die zweite leitfähige Schicht die Oberfläche des Rohres bildet, und die leitfähigen ersten und zweiten Schichten durch die leitfähige Brücke verbunden sind, wobei die erste leitfähige Schicht durch irgendeinen Punkt auf der zweiten leitfähigen Schicht geerdet ist.

4. Verfahren nach irgendeinem der Ansprüche 1 bis 3, bei welchem die leitfähige Brücke durch ein extrudiertes oder festes Teil aus einem leitfähigen Polymermaterial gebildet ist.

5. Verfahren nach irgendeinem der Ansprüche 1 bis 4, umfassend
- Einfügen eines aufblasbaren Stoppers in das Rohr in einem Bereich, in dem ein Loch (6) gebohrt wurde,
- Extrudieren einer geschmolzenen Masse aus einem leitfähigen Polymer (6') in das Loch (6), und
- Beschränken des Flusses aus der geschmolzenen Polymermasse in das Rohr (1) durch den Stopper, während weiterhin zugelassen wird, dass Einiges der geschmolzenen Polymermasse über die Kante innerhalb des Rohres fließt, um das Gebiet um den Umfang des Loches zu bedecken, um die Kontaktfläche zwischen der leitfähigen Innenschicht zu erhöhen.

6. Verfahren nach irgendeinem der Ansprüche 1 bis 3, umfassend
- Einpassen eines Endes eines ersten Rohres (11) gegen ein Ende eines zweiten Rohres (12), um eine Schnittstelle zwischen den Rohren zu bilden,
- Bohren eines Loches (16) an der Schnittstelle zwischen den Rohren,
- temporäres Trennen der Rohre,
- Einfügen eines Elektroschmelzstopfens (16') und wieder gegeneinander Bringen der Rohrenden, und
- Schmelzen des Stopfens, um ihn an die Rohrenden zu schweißen.

7. Verfahren nach irgendeinem der Ansprüche 1 bis 3, bei welchem ein Loch von der Außenseite des Rohres zu der leitfähigen Schicht (24", 27") gefräst wird, und ein Stopfen (26') aus einem leitfähigen Material und mit derselben Form wie das gefräste Loch an die gefräste Aussparung reibgeschweißt wird.

8. Verfahren nach irgendeinem der Ansprüche 1 bis 3, bei welchem ein Loch von der Innenseite des Rohres zu der leitfähigen Schicht (24", 27") gefräst wird, und ein Stopfen (26') aus einem leitfähigen Material und mit derselben Form wie das gefräste Loch in die gefräste Aussparung reibgeschweißt wird.

9. Verfahren nach irgendeinem der vorhergehenden Ansprüche, bei welchem die Verbindung mit einem Elektroschmelzanschlussstück (3) gesichert ist, welches als ein Kranz um die Verbindung angeordnet ist, oder ein äquivalentes mechanisches Mittel.

10. Verfahren nach irgendeinem der vorhergehenden Ansprüche, bei welchem dabei 1 bis 10 leitfähige Brücken gebildet werden, vorzugsweise ca. 1 bis 4.

11. Verfahren nach irgendeinem der vorhergehenden Ansprüche zum Verbinden von zwei Rohren mit einer mehrschichtigen Wandstruktur und zumindest eine leitfähige Schicht umfassend, welche mit einer nicht leitfähigen Schicht bedeckt ist, welche sich auf der Außenseite der leitfähigen Schicht befindet, wobei bei dem Verfahren
- die Enden zweier mehrschichtiger Rohre gegeneinander in einer anstoßenden Beziehung passen, und
- die Enden der Rohre zueinander gesichert sind, um eine Verbindung zwischen den Rohren zu bilden, und
- die leitfähige Schicht geerdet ist.

## Revendications

1. Procédé de mise à la terre d'un joint entre deux tuyaux (1, 2) ayant une structure de paroi à couches multiples et contenant au moins une couche conductrice (4", 7") qui est recouverte par une couche non conductrice (5, 8) qui est positionnée sur l'extérieur de la couche conductrice,
comprenant les étapes consistant à :
- former au moins une ouverture (6, 16) dans la paroi de tuyau au niveau du joint, ladite ouverture s'étendant à travers la paroi, de la couche non conductrice à la couche conductrice, et
- remplir l'ouverture avec un matériau conducteur (6'), ledit matériau conducteur formant un pont conducteur à partir de la couche conductrice en passant par la couche non conductrice jusqu'à son extérieur pour la mise à la terre de la couche conductrice.

2. Procédé selon la revendication 1, dans lequel le tuyau comprend une couche conductrice interne et une couche non conductrice externe, cette dernière formant la couche de surface du tuyau, moyennant quoi la couche interne est mise à la terre en mettant à la terre le pont conducteur.

3. Procédé selon la revendication 1, dans lequel le tuyau comprend une première couche conductrice, une seconde couche conductrice positionnée à une distance de la première couche conductrice, et une couche intermédiaire positionnée entre la première et la seconde couche conductrice, moyennant quoi la seconde couche conductrice forme la surface du tuyau et les première et seconde couches conductrices étant raccordées par le biais du pont conducteur, ladite première couche conductrice étant mise à la terre par l'intermédiaire de n'importe quel point sur la seconde couche conductrice.

4. Procédé selon l'une quelconque des revendications 1 à 3, dans lequel le pont conducteur est formé par une pièce extrudée ou pleine de matériau polymère conducteur.

5. Procédé selon l'une quelconque des revendications 1 à 4, comprenant les étapes consistant à :
- insérer une butée gonflable dans le tuyau dans la région où un trou (6) a été percé,
- extruder la masse en fusion d'un polymère conducteur (6') dans le trou (6), et
- limiter l'écoulement de la masse de polymère en fusion dans le tuyau (1) avec la butée tout en permettant cependant à une certaine partie de la masse de polymère en fusion de s'écouler sur le bord à l'intérieur du tuyau afin de recouvrir la région située autour de la circonférence du trou afin d'augmenter la région de contact entre la couche interne conductrice.

6. Procédé selon l'une quelconque des revendications 1 à 3, comprenant les étapes consistant à :
- monter une extrémité d'un premier tuyau (11) contre une extrémité d'un second tuyau (12) afin de former une interface entre les tuyaux,
- percer un trou (16) au niveau de l'interface située entre les tuyaux,
- séparer temporairement les tuyaux,
- insérer un raccord d'électrofusion (16') et amener à nouveau les extrémités de tuyau l'une contre l'autre, et
- faire fondre le raccord en le soudant sur les extrémités de tuyau.

7. Procédé selon l'une quelconque des revendications 1 à 3, dans lequel un trou est fraisé depuis l'extérieur du tuyau jusqu'à la couche conductrice (24", 27"), et un raccord (26') réalisé avec un matériau conducteur et de la même forme que le trou fraisé, est soudé par friction sur l'ouverture fraisée.

8. Procédé selon l'une quelconque des revendications 1 à 3, dans lequel un trou est fraisé depuis l'intérieur du tuyau jusqu'à la couche conductrice (24", 27"), et un raccord (26') réalisé avec le matériau conducteur et ayant la même forme que le trou fraisé, est soudé par friction sur l'ouverture fraisée.

9. Procédé selon l'une quelconque des revendications précédentes, dans lequel le joint est fixé avec un accessoire d'électrofusion (3), qui est placé comme un collier autour du joint, ou un moyen mécanique équivalent.

10. Procédé selon l'une quelconque des revendications précédentes, dans lequel 1 à 10 ponts conducteurs sont formés, de préférence environ 1 à 4.

11. Procédé selon l'une quelconque des revendications précédentes pour assembler deux tuyaux ayant une structure de paroi à couches multiples et contenant au moins une couche conductrice qui est recouverte par une couche non conductrice qui est positionnée à l'extérieur de la couche conductrice, procédé dans lequel :
- les extrémités des deux tuyaux à couches multiples sont montées l'une contre l'autre en relation de butée, et
- les extrémités des tuyaux sont fixées l'une à l'autre afin de former un joint entre les tuyaux, et
- ladite couche conductrice est mise à la terre.
